(19) Europäisches Patentamt / European Patent Office / Office européen des brevets

(11) **EP 1 270 954 B1**

(12) **EUROPÄISCHE PATENTSCHRIFT**

(45) Veröffentlichungstag und Bekanntmachung des Hinweises auf die Patenterteilung:
**20.06.2007 Patentblatt 2007/25**

(51) Int Cl.:
*F15B 11/028* (2006.01)    *F16H 61/30* (2006.01)
*F15B 21/08* (2006.01)

(21) Anmeldenummer: **02008543.7**

(22) Anmeldetag: **16.04.2002**

(54) **Verfahren zur Ermittlung des Betätigungsdrucks eines druckmittelbetätigbaren Stellzylinders**

Process to determine the actuation pressure of a positioning cylinder operated by fluid pressure

Procédé pour déterminer la pression d'actionnement d'un vérin de positionnement

(84) Benannte Vertragsstaaten:
**DE FR IT SE**

(30) Priorität: **30.06.2001 DE 10131853**

(43) Veröffentlichungstag der Anmeldung:
**02.01.2003 Patentblatt 2003/01**

(73) Patentinhaber: **WABCO GmbH**
**30453 Hannover (DE)**

(72) Erfinder:
• **Klik, Stefan**
**30171 Hannover (DE)**
• **Meyer, Ingo**
**31547 Rehburg-Loccum (DE)**
• **Schumacher, Ralph**
**30459 Hannover (DE)**

(74) Vertreter: **Günther, Constantin et al**
**WABCO GmbH**
**Postfach 91 12 62**
**30432 Hannover (DE)**

(56) Entgegenhaltungen:
**EP-A- 1 067 319      DE-A1- 19 918 164**
**US-A- 5 829 335**

EP 1 270 954 B1

**Beschreibung**

Die Erfindung betrifft ein Verfahren zur Ermittlung des Betätigungsdrucks eines druckmittelbetätigbaren Stellzylinders gemäß dem Oberbegriff des Patentanspruchs 1.

Ein gattungsgemäßes Verfahren ist aus der DE 199 31 973 A1 bekannt.

Bei der das bekannte Verfahren anwendenden Druckmittelanlage handelt es sich um eine Einrichtung zum Steuern einer Stelleinrichtung für ein Getriebe, insbesondere ein mechanisches Handschaltgetriebe für Kraftfahrzeuge, das mittels dieser Steuer- und Stelleinrichtung automatisiert betrieben werden kann. Hierfür weist die Stelleinrichtung zwei durch Druckmittel, insbesondere Hydraulikflüssigkeit, betätigbare Stellzylinder auf, mittels deren ein Getriebebetätigungselement, das bei herkömmlichen Handschaltgetrieben bisher der Handschalthebel ist, in Längs- und in Querrichtung betätigt werden kann. Hierdurch ist eine Gassen- und Gangauswahl an dem Getriebe möglich, weshalb der Stellzylinder für die Gassenauswahl auch als Gassenzylinder und der Stellzylinder für die Gangauswahl auch als Gangzylinder bezeichnet wird.

Insbesondere für das Einlegen eines Gangs muß der Gangzylinder hinsichtlich seiner Stellkraft relativ fein und genau dosiert betrieben werden können, damit eine Synchronisation der Getriebezahnräder bzw. der Synchronringe einerseits verschleißarm, andererseits aber auch zügig erfolgen kann. Da bei derartigen druckmittelbetätigbaren Stellzylindern ein einfacher physikalischer Zusammenhang zwischen der ausgegebenen Stellkraft und dem in dem Stellzylinder vorliegenden Betätigungsdruck gegeben ist, nämlich eine Proportionalität mit der Kolbenfläche des Stellzylinders als Proportionalitätskonstante, kann eine dosierte Stellkraftabgabe auch über eine Dosierung des Betätigungsdrucks auf einfache Weise erfolgen. Hierfür ist allerdings eine möglichst genaue Kenntnis des Betätigungsdrucks erforderlich.

Aus Kostengründen und um die Komplexität der Stelleinrichtung gering zu halten ist es vielfach nicht erwünscht, einen eigenen Drucksensor zur Ermittlung des Betätigungsdrucks des Stellzylinders vorzusehen. Statt dessen wird, wie aus dem eingangs erwähnten Stand der Technik bekannt, ein an einer anderen Stelle, z. B. stromaufwärts, gelegener Drucksensor vorgesehen. Dieser kann dann je nach Schaltstellung der Ventile der Stelleinrichtung verschiedene Drücke sensieren, z. B. den Zuflußdruck von der Druckversorgung oder auch einen dem Betätigungsdruck des Stellzylinders vergleichbaren Druck. Die Genauigkeit der Sensierung nimmt dabei mit zunehmender Entfernung derjenigen Stelle, deren Druck sensiert werden soll, von dem Drucksensor ab.

Der Erfindung liegt die Aufgabe zugrunde, ein Verfahren zur Ermittlung des Betätigungsdrucks eines druckmittelbetätigbaren Stellzylinders anzugeben, welches eine höhere Genauigkeit aufweist als bekannte Verfahren.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, ebenfalls mit einem einzigen Drucksensor verschiedene Drücke, wie oben erwähnt, sensieren zu können. Somit ist der gerätemäßige Aufwand nicht höher als bei dem bekannten Verfahren.

In besonders vorteilhafter Weise wird unter Anwendung einer bei Stellzylinder-Steuerungen ohnehin erforderlichen Größe, nämlich des Stellwegs des Stellzylinders, auf einfache Weise mit wenig Rechenaufwand eine sehr genaue Ermittlung des Betätigungsdrucks des Stellzylinders und damit der Stellkraft ermöglicht. In vorteilhafter Weise kann dabei der Stellweg aus einem vorhandenen Signal gewonnen werden, z. B. aus dem Signal eines in den Stellzylinder integrierten oder extern angebrachten Wegsensors. Eine andere Möglichkeit besteht in der Gewinnung dieses Signals aus Signalen von an den Stellzylindern angeschlossenen Einheiten, wie z. B. einem an dem Stellzylinder angeschlossenen Getriebe, welches intern eine Wegsensierung aufweist und das so sensierte Signal z. B. über einen Datenbus an eine das erfindungsgemäße Verfahren ausführende Einrichtung überträgt. Hierbei sind eine Vielzahl von Möglichkeiten denkbar.

In einer vorteilhaften Weiterbildung der Erfindung ist der den Zuflußdruck sensierende Drucksensor an einer bezüglich des ausfahrenden Stellzylinders stromaufwärts gelegenen Stelle der zu dem Stellzylinder führenden Druckmittelleitung angeordnet. Hierdurch liegt an dem Drucksensor ein höheres Druckniveau vor als in dem Stellzylinder, da die zu dem Stellzylinder führenden Leitungsabschnitte Druckverluste hervorrufen. Infolge des höheren Druckniveaus an dem Drucksensor ist dort eine genauere Sensierung und sowie eine erhöhte Auflösung des Signals im Vergleich zu einer Drucksensierung direkt an dem Stellzylinder möglich.

In einer weiteren vorteilhaften Ausgestaltung der Erfindung wird aus dem Stellweg bzw. der Änderung des Stellwegs eine die Strömungsgeschwindigkeit des Druckmittels durch die Leitung repräsentierende Größe bestimmt. Dies kann in vorteilhafter Weise durch zeitliche Differentiation des Stellwegs erfolgen. In zeitdiskreten Systemen erfolgt die Berechnung der Änderung des Stellwegs bevorzugt mittels Differenzenquotienten.

Gemäß einer vorteilhaften Weiterbildung der Erfindung kann auch der Temperatureinfluß, welcher die Dichte des Druckmittels beeinflußt, berücksichtigt werden, z. B. indem ein Temperatursensor vorgesehen wird und in Abhängig von dessen Signal eine korrigierte Dichte des Druckmittels berechnet wird.

Die Erfindung wird im folgenden unter Verwendung von Zeichnungen und unter Nennung weiterer Vorteile anhand eines Ausführungsbeispiels beschrieben.

Es zeigen

Fig. 1    einen Teil einer Stelleinrichtung für ein Getriebe und

Fig. 2    Zeitverläufe der Stellkraft bzw. des Stellweges an dem Gangzylinder.

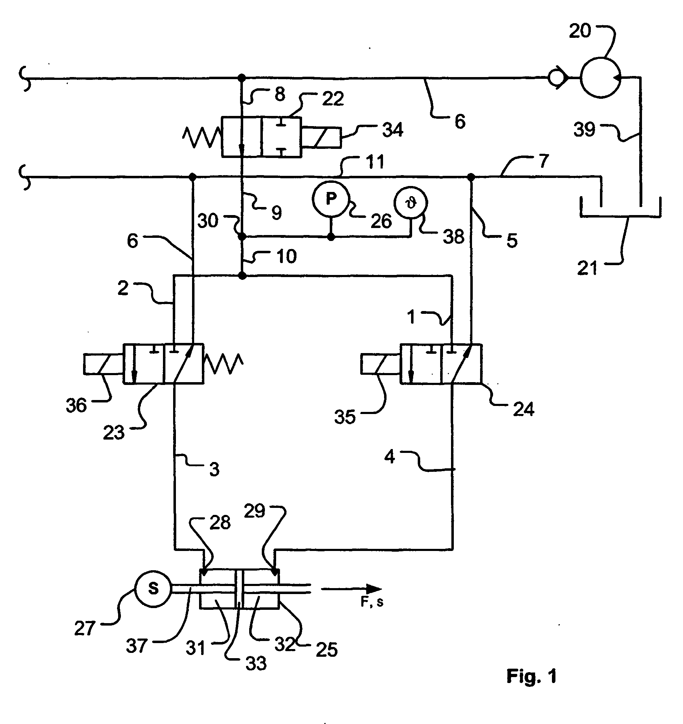

Der in der Fig. 1 dargestellte Teil einer Stelleinrichtung entspricht dem Gangzylinder samt Ansteuerungsmimik aus dem eingangs genannten Stand der Technik. Bezüglich der Konstruktion und Funktionsweise der gesamten Getriebesteuereinrichtung wird auf diesen Stand der Technik verwiesen.

Der in dem in der Fig. 1 dargestellten Ausführungsbeispiel angegebene Stellzylinder (25) wird als Gangzylinder in einer hydraulischen Getriebesteuereinrichtung verwendet. Im vorliegenden Ausführungsbeispiel ist er als doppelt wirkender Stellzylinder mit zwei Druckmittelzufluß- bzw. -abflußanschlüssen (28, 29) ausgebildet, über die die auf gegenüberliegenden Seiten eines Kolbens (33) angeordneten Druckmittelkammern (31, 32) mit der Hydraulikflüssigkeit versorgt werden können.

Hierbei ist auch der Einsatz eines einfach wirkenden Stellzylinders denkbar, z. B. nur mit einem Druckmittelanschluß (28) und einer Druckmittelkammer (31). Die beim doppelt wirkenden Stellzylinder für eine Rückstellung vorgesehene Druckmittelkammer (32) kann in diesem Fall durch eine externe mechanische Kraft, z. B. eine Rückstellfeder oder eine von einem mechanisch mit dem Stellzylinder verbundenen Schaltgetriebe ausgeübten Rückstellkraft, ersetzt werden. Im folgenden wird für beide Varianten eine bevorzugte Verfahrensweise zur Bestimmung des Betätigungsdrucks angegeben.

Der doppelt wirkende Stellzylinder (25) gemäß Fig. 1 ist an seinen Druckmittelanschlüssen (28, 29) über Druckmittelleitungen (3, 4) jeweils an elektromagnetisch betätigbare 3/2-Wegeventile (23, 24) angeschlossen. Die Ventile (23, 24) können in zwei Stellungen betrieben werden. Hierbei ist jeweils die eine Stellung für einen Druckmittelzufluß über die jeweilige Leitung (3, 4) in die jeweilige Druckmittelkammer (31, 32) vorgesehen. Die jeweils andere Schaltstellung dient zum Druckmittelabfluß aus den Druckmittelkammern (31, 32) über die Leitungen (3, 4).

Die Ventile (23, 24) sind mit ihren Druckmittelzuflußanschlüssen über Druckmittelleitungen (1, 2) zu einer Druckmittelleitung (10) zusammengeführt und über eine sich daran anschließende Druckmittelleitung (9) mit einem zur Druckmodulation dienenden, elektromagnetisch betätigbaren 2/2-Wegeventil (22) verbunden. Das Ventil (22) ist seinerseits über eine Druckmittelleitung (8) mit einer Druckmittelzufuhrleitung (6) verbunden. An der Druckmittelzufuhrleitung (6) können weitere, in der Fig. 1 nicht dargestellte Verbraucher angeschlossen sein. Die Druckmittelzufuhr in die Leitung (6) erfolgt durch eine Pumpe (20) und ein nicht näher bezeichnetes Rückschlagventil üblicher Bauart. Die Pumpe (20) fördert das sich auf einem geringeren Druckniveau befindliche Druckmittel über eine Druckmittelleitung (39) aus einem Druckmittelvorratsbehälter (21).

Die Ventile (23, 24) sind außerdem mit ihnen Druckmittelabflußanschlüssen über Druckmittelleitungen (5, 6) mit einer Druckmittelrückflußleitung (7) verbunden. Über die Druckmittelrückflußleitung (7), an der auch weitere Verbraucher zwecks Rückspeisung des Druckmittels angeschlossen sein können, dient zur Rückführung nicht benötigten Druckmittels in den Druckmittelvorratsbehälter (21).

Des weiteren weist die Einrichtung gemäß Fig. 1 einen Drucksensor (25) auf, der den an einem Punkt (30) vorliegenden Druck am Verbindungspunkt der Leitungen (9, 10) ermittelt. Der Drucksensor (25) ist druckseitig in der Nähe des Druckauslasses des Ventils (22) angeordnet und daher besonders geeignet, unmittelbar den von dem Ventil (22) eingestellten Zuflußdruck zu sensieren. Der Drucksensor (25) gibt ein dem Druck an dem Punkt (30) entsprechendes Drucksignal (p) ab.

Des weiteren ist ein Wegsensor (27) mechanisch mit einer mit dem Kolben (33) des Stellzylinders (25) verbundenen Kolbenstange (37) verbunden. Der Wegsensor (27) gibt ein dem Betätigungsweg des Stellzylinders (25) entsprechendes Wegsignal (s) ab.

Die Sensoren (25, 27) sind über in der Fig. 1 nicht dargestellte elektrische Leitungen mit einem ebenfalls nicht dargestellten elektronischen Steuergerät verbunden, welches zur Ausführung des nachfolgend beschriebenen Verfahrens dient. Das elektronische Steuergerät ist außerdem über ebenfalls nicht dargestellte elektrische Leitungen mit den Elektromagneten (34, 35, 36) der Ventile (22, 23, 24) verbunden, über die es die Ventile (22, 23, 24) ein- bzw. ausschalten kann. Durch geeignetes Ein- und Ausschalten des Ventils (22) ist außerdem eine Druckeinstellung in der Leitung (9) sowie den daran angeschlossenen Teilen möglich.

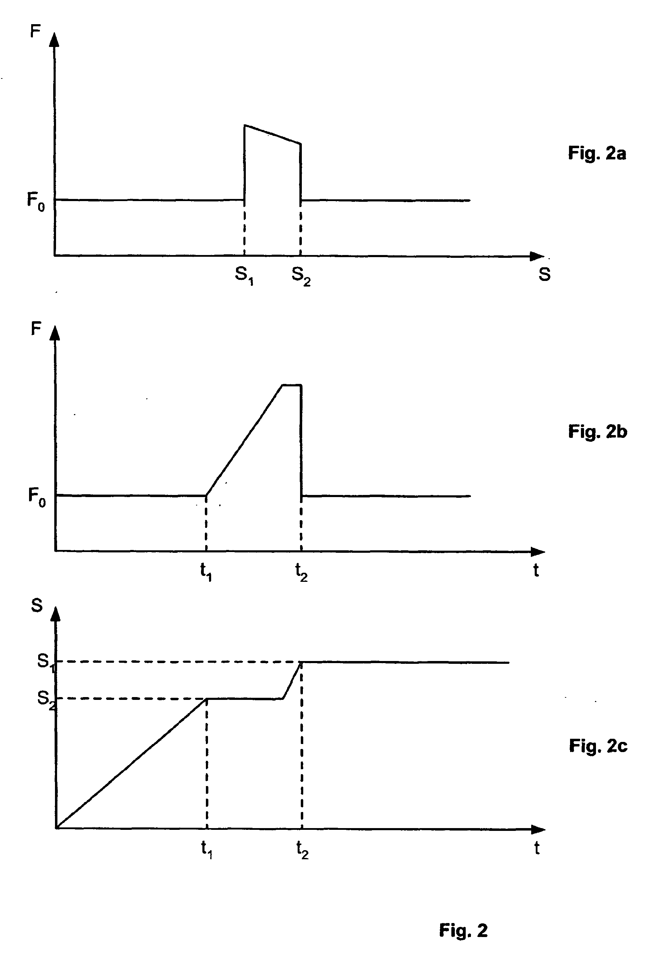

Es ist nun Aufgabe des elektronischen Steuergeräts, durch Auswertung der Sensorsignale (p, s) die durch den Stellzylinder (25) ausgegebene Betätigungskraft (F) nach einem bestimmten, anhand der Fig. 2 im folgenden noch näher erläuterten Verlauf unter Abgabe geeigneter Betätigungssignale an die Ventile (22, 23, 24) möglichst genau einzustellen und zu steuern. Da die Betätigungskraft (F) direkt proportional zu der Differenz des Drucks ($p_1$) in der Druckmittelkammer (31) zu dem Druck ($p_2$) in der Druckmittelkammer (32) ist, wobei die wirksame Fläche (A) des Kolbens (33) die Proportionalitätskonstante darstellt, kann eine Einstellung der Betätigungskraft (F) durch das elektronische Steuergerät auch durch eine Modulation und Steuerung der genannten Druckdifferenz ($p_1 - p_2$) erfolgen. Die Fläche (A) ist dabei als Konstante in dem Steuergerät gespeichert. Das Steuergerät wendet dabei die Beziehung an:

$$F = (p_1 - p_2) \bullet A$$

Dem elektronischen Steuergerät stehen für eine Bestimmung der Druckdifferenz ($p_1 - p_2$) lediglich das Drucksignal (p) an dem Punkt (30) sowie das Wegsignal (s) zur Verfügung. Das Drucksignal (p) an dem Punkt (30) entspricht aufgrund der zwischengeschalteten Leitungsstücke sowie der Ventile (23, 24) und der hierdurch bedingten Strömungswiderstände nicht exakt der Druckdifferenz ($p_1 - p_2$). Betrachtet man z. B. den Fall einer Druckerhöhung in der Druckmittelkammer (31), was einem ausfahrenden Stellzylinder (25) entspricht, so würde in diesem Fall das Ventil (23) derart geschaltet werden, daß eine Verbindung der Druckmittelkammer (31) über die Leitungen (3, 2, 10) zu dem Druckmodulationsventil (22) hergestellt wird. Das Ventil (24) würde in eine Druckabflußstellung geschaltet werden, in der das Druckmittel aus der Druckmittelkammer (32) über die Leitungen (4, 5, 7) in den Druckmittelvorratsbehälter (21) zurückfließen kann. In diesem Fall entspricht also der Druck ($p_1$) in der Druckmittelkammer (31) einem um die durch die Strömungswiderstände der Leitungen (10, 2, 3) und des Ventils (23) verminderten Druck (p). Der entgegenwirkende Druck ($p_2$) in der Druckmittelkammer (32) entspricht einem in dem Druckmittelvorratsbehälter (21) vorliegenden, dem elektronischen Steuergerät bekannten Druck ($p_o$), z. B. dem Umgebungsdruck, erhöht um die durch die Strömungswiderstände der Druckmittelleitungen (4, 5, 7) und des Ventils (24) bewirkten Druckverluste.

Derartige Druckverluste können allgemein nach folgender Beziehung berechnet werden:

$$\Delta p = \xi \bullet \frac{\rho}{2} \bullet v^2$$

Hierbei ist $\xi$ ein für ein bestimmtes Druckmittelteil spezifischer Widerstand, $\rho$ bezeichnet die Dichte des Druckmittels und v die Strömungsgeschwindigkeit des Druckmittels. Der Strömungswiderstand ($\xi$) kann bei einer geraden Rohrleitung z. B. gemäß folgender Beziehung berechnet werden:

$$\xi_{Rohr} = \lambda \bullet \frac{1}{d}$$

1 ist hierbei die Länge der Rohrleitung, d deren Durchmesser und $\lambda$ ein spezifischer Strömungswiderstandsbeiwert, der z. B. die Rauhigkeit der Rohrinnenwandung berücksichtigt. Bei anderen strömungsführenden Teilen, wie z. B. Rohrbögen oder den Ventilen (23, 24) kann der Strömungswiderstand ($\xi$) vorzugsweise experimentell unter Verwendung der Gleichung [2] ermittelt werden. Für bestimmte Anordnungen kann der Strömungswiderstand auch berechnet werden, wie beispielsweise in dem Fachbuch "Ölhydraulik", erschienen im Springer-Verlag, Verfasser Dietmar Findeisen und Franz Findeisen, beschrieben.

Die Dichte ($\rho$) ist eine Materialkonstante, die das Verhältnis eines Massenquantums zu einem Volumenquantum des Materials angibt. Sie kann z. B. einschlägigen Datenbüchern entnommen werden. In einer vorteilhaften Weiterbildung der Erfindung kann auch die Temperaturabhängigkeit der Dichte ($\rho$) von der Flüssigkeitstemperatur, wie durch die Beziehung

$$\rho(\theta) = \rho_{15°C} \bullet \frac{1}{1 + \alpha_v \bullet (\theta - 15°c)}$$

hervorgeht, berücksichtigt werden. $\theta$ stellt hierbei die Temperatur in °C dar, $\alpha_v$ einen flüssigkeitsspezifischen Temperaturkoeffizienten, der ebenfalls Datenbüchern zu entnehmen ist, und $\rho_{15°C}$ eine bei der Temperatur 15°C vorliegende Dichte der jeweiligen Flüssigkeit. Durch Verwendung eines Temperatursensors (38), der die jeweilige Temperatur des Druckmittels erfaßt und ein die Temperatur des Druckmittels angebendes Signal ($\theta$) an das elektronische Steuergerät abgibt, kann gemäß der Gleichung [4] eine Temperaturkompensation erfolgen, indem die real vorliegende Dichte $\rho(\theta)$ bestimmt wird und in der Gleichung [2] eingesetzt wird.

Wie der Fachmann aus den vorangegangenen Ausführungen erkennt, wird bei der Berechnung der Druckdif-

ferenz ($\Delta p$) der jeweilige kinetische Druck (Staudruck) berücksichtigt, die Anteile des geodätischen Drucks (Gewichtsdruck) werden wegen ihrer geringen Beiträge als hinreichend klein vernachlässigt. Eine derartige Vereinfachung führt bei hydraulischen Kleinanlagen, wie z. B. einer Getriebesteuerung, nicht zu nennenswerten Ungenauigkeiten.

In einer vorteilhaften Ausgestaltung der Erfindung werden sämtliche in den jeweiligen Zuflußleitungen auftretenden Strömungswiderstände zusammen mit der Dichte ($\rho$) und dem Faktor ½, wie in Gleichung [2] angegeben, zu einer Konstanten zusammengefaßt. Diese Konstante kann experimentell bei der Entwicklung einer Druckmittelanlage bzw. einer Getriebesteuerung einmalig bestimmt werden und dann dem elektronischen Steuergerät für eine spätere Verwendung einprogrammiert werden. Dies wird vorzugsweise ebenfalls für die Druckmittelabflußleitungen gemacht, so daß sich bezüglich der Betriebszustände "Stellzylinder ausfahren" und "Stellzylinder (wieder) einfahren", vier Konstanten ergeben, wie nachfolgend beschrieben:

Stellzylinder ausfahren, Druckmittelzufluß:
Eine Konstante $c_1$ beinhaltet die Strömungswiderstände der Leitungsabschnitte (10, 2, 3) sowie des Ventils (23).

Stellzylinder ausfahren, Druckmittelabfluß:
Eine Konstante $c_2$ beinhaltet die Strömungswiderstände der Rohrleitungsabschnitte (4, 5, 7) sowie des Ventils (24).

Stellzylinder einfahren, Druckmittelzufluß:
Eine Konstante $c_3$ beinhaltet die Strömungswiderstände der Leitungsabschnitte (10, 1, 4) sowie des Ventils (24).

Stellzylinder einfahren, Druckmittelabfluß:
Eine Konstante $c_4$ beinhaltet die Strömungswiderstände der Leitungsabschnitte (3, 6, 11, 7) sowie des Ventils (23).

Diese Konstanten werden, wie bereits gesagt, experimentell ermittelt und in dem elektronischen Steuergerät zur Steuerung des Schaltgetriebes gespeichert. Unter Anwendung dieser Konstanten kann nun der Betätigungsdruck beim Ausfahren des Stellzylinders aus dem Zuflußdruck ($p$) gemäß folgender Beziehung bestimmt werden:

$$p_1 = p - (c_1 - c_2) \bullet v^2$$

Die Größe $v$ stellt, wie bereits ausgeführt, die Strömungsgeschwindigkeit des Druckmittels dar. Diese hängt allgemein von dem Strömungsquerschnitt ab, d. h. sie wird sich in der Praxis beim Durchfließen mehrerer Rohrleitungsstücke und Ventile verändern. In einer besonders vorteilhaften und effizienten Weise bestimmt das Verfahren gemäß der vorliegenden Erfindung die Strömungsgeschwindigkeit ($v$) gemäß Gleichung [5] aus der zeitlichen Änderung des Wegsignals ($s$), d. h. durch zeitliche Differentiation oder, in digitalen Steuerungen, mittels Differenzen-Quotienten. In besonders vorteilhafter Weise werden hierbei die Konstanten ($c_1$, $c_2$, $c_3$, $c_4$) experimentell bezogen auf die Änderung des Wegsignals ($ds/dt$) ermittelt, sodaß weitere Umrechnungen entfallen können. Im Ergebnis erfolgt somit eine Berechnung des Betätigungsdrucks ($p_1$) unter Anwendung der Gleichung [5] wie folgt:

$$p_1 = p - (c_1 - c_2) \bullet \left(\frac{ds}{dt}\right)^2$$

Bezüglich des Wiedereinfahrens des Stellzylinders (25) wird der dann vorliegende Betätigungsdruck ($p_2$) in der Druckmittelkammer (32) in analoger Weise bestimmt, nämlich

$$p_2 = p - (c_3 - c_4) \bullet \left(\frac{ds}{dt}\right)^2$$

Für einen einfach wirkenden Stellzylinder gilt in analoger Weise:

$$p_1 = p - c_1 \bullet \left(\frac{ds}{dt}\right)^2$$

Durch die doppelte Nutzung des Wegsignals (s), nämlich zur Wegsensierung und zusätzlich zur Druckberechnung, kann bei einer Getriebesteuerung der beschriebenen Art in besonders einfacher und effizienter Weise mit nur einem einzigen Drucksensor (25) eine sehr genaue Regelung des Betätigungsdrucks des Stellzylinders und demzufolge der ausgegebenen Betätigungskraft (F) erfolgen. Eine derartige genaue Kraftmodulation ist beim Betrieb einer Getriebesteuereinrichtung für ein automatisiertes Schaltgetriebe insbesondere beim Einrücken des Gangs erforderlich, was im vorliegenden Ausführungsbeispiel einem Ausfahren des Stellzylinders (25) entsprechen soll. Hierdurch sollen einerseits die beim Einlegen des Gangs zunächst aneinanderreibenden und schließlich ineinandergreifenden Synchronringe schonend gegeneinander bewegt werden. Andererseits ist es erwünscht, daß das Einlegen des Gangs möglichst schnell abläuft, d.h. es ist in der Praxis eine Gangwechselzeit erwünscht, die nicht oberhalb der Gangwechselzeit eines menschlichen Bedieners liegt. Um diese widersprechenden Ziele möglichst gut zu erfüllen, sind dem elektronischen Steuergerät zur Steuerung des Getriebes bestimmte Betätigungskraftverläufe vorgegeben, welche im folgenden anhand der Fig. 2 näher erläutert werden sollen. Die. Betätigungskraftverläufe sind in dem elektronischen Steuergerät einprogrammiert.

In der Fig. 2 wird der Vorgang des Einlegens eines Gangs, d. h. des Ausfahrens des Stellzylinders (25), beispielhaft erläutert. Hierbei ist in der Fig. 2a ein Verlauf der Betätigungskraft (F) über den Weg (s) dargestellt, in der Fig. 2b die Betätigungskraft (F) über die Zeit (t) und in der Fig. 2c der Weg (s) über die Zeit (t). Die Diagramme gemäß Fig. 2b und Fig. 2c korrelieren hinsichtlich der Abszisse miteinander, bezüglich der Fig. 2a und der Fig. 2b stellt der Zeitpunkt ($t_1$) und der Wegpunkt ($s_1$) einen miteinander korrelierenden Ortszeitpunkt dar. In den übrigen Bereichen korrelieren die Abszissen der Fig. 2a und 2b wegen ihrer unterschiedlichen physikalischen Größen nicht unmittelbar miteinander.

Ausgehend von der Nullage (s = 0) des Stellzylinders (25) wird zunächst eine konstante Betätigungskraft ($F_0$) ausgegeben, die im wesentlichen konstant bleibt, bis zum Zeitpunkt ($t_1$) bzw. am Wegpunkt ($s_1$) die Synchronringe des Schaltgetriebes aufeinandertreffen und eine zunächst unterschiedliche Drehzahl aufweisen, weshalb sie noch nicht ineinandergreifen können. Zum Zeitpunkt ($t_1$) wird dann die Betätigungskraft (F) gemäß Fig. 2b gleichmäßig erhöht, wobei, wie anhand der Fig. 2a erkennbar ist, hierbei nur eine äußerst geringe Wegänderung erfolgt. Die Wegänderung ist auf eine elastische Verformung der Synchronringe und anderer Getriebeteile zurückzuführen.

Schließlich erfolgt bei einer Angleichung der Drehzahlen der Synchronringe ein Ineinandergreifen dieser, was an einem plötzlichen Abfall der Betätigungskraft (F) erkennbar ist. Zum Zeitpunkt ($t_2$) ist eine Synchronisation erfolgt. Sobald das elektronische Steuergerät dies erkannt hat, verringert es die Betätigungskraft (F) wiederum auf das Niveau ($F_0$). Das Wegsignal befindet sich dann am Wegpunkt ($s_2$). Von diesem Zeitpunkt an bewirkt der Stellzylinder ein Halten der Synchronringe bzw. des Gangs in der eingelegten Stellung.

**Patentansprüche**

1. Verfahren zur Ermittlung des Betätigungsdrucks ($p_1$, $p_2$) eines druckmittelbetätigbaren Stellzylinders (25), welcher infolge einer Beaufschlagung mit dem Betätigungsdruck ($p_1$, $p_2$) einen Stellweg (s) ausgibt, wobei an einer Stelle (30) einer den Stellzylinder (25) mit dem Druckmittel versorgenden Leitung (1, 2, 3, 4, 6, 8, 9, 10) ein Drucksensor (26) einen Zuflußdruck (p) ermittelt, **dadurch gekennzeichnet, daß** der Betätigungsdruck ($p_1$, $p_2$) unter Verwendung der durch den Betätigungsdruck ($p_1$, $p_2$) bewirkten Änderung des Stellwegs (s) rechnerisch aus dem Zuflußdruck (p) ermittelt wird.

2. Verfahren nach Anspruch 1, **dadurch gekennzeichnet, daß** der Drucksensor (26) an einer bezüglich des ausfahrenden Stellzylinders (25) stromaufwärts gelegenen Stelle (30) der Leitung (1, 2, 3, 4, 6, 8, 9, 10) angeordnet ist.

3. Verfahren.nach einem der vorhergehenden Ansprüche, **dadurch gekennzeichnet, daß** die Änderung des Stellwegs (s) an dem Stellzylinder (25) mittels eines Wegsensors (27) ermittelt wird.

4. Verfahren nach einem der vorhergehenden Ansprüche, **dadurch gekennzeichnet, daß** der ermittelte Betätigungsdruck ($p_1$, $p_2$) zur Regelung der Stellkraft (F) des Stellzylinders (25), insbesondere zur Schaltkraftregelung für eine hydraulische Getriebesteuerung, verwendet wird.

5. Verfahren nach einem der vorhergehenden Ansprüche, **dadurch gekennzeichnet, daß** ein Maß für die Strömungsgeschwindigkeit (v) des Druckmittels durch die Leitung (1, 2, 3, 4, 6, 8, 9, 10) aus der Änderung des Stellwegs (s) des Stellzylinders (25) bestimmt wird.

**6.** Verfahren nach einem der vorhergehenden Ansprüche, **dadurch gekennzeichnet, daß** die Temperatur (θ) des Druckmittels berücksichtigt wird.

**7.** Verfahren nach einem der vorhergehenden Ansprüche, **dadurch gekennzeichnet, daß** der Stellzylinder (25) doppelwirkend ausgelegt ist und über zwei 3/2-Wegeventile (23, 24) betätigt wird, mit deren Druckmittelzuflußanschluß der Drucksensor (26) verbunden ist.

**Claims**

**1.** Method of determining the actuation pressure ($p_1$, $p_2$) of a servo cylinder (25) which is arranged to be actuated by a pressure medium and which produces a positional displacement (s) as a result of being subjected to the actuation pressure ($p_1$, $p_2$), a pressure sensor (26) determining an inflow pressure (p) at a location (30) in a conduit (1, 2, 3, 4, 6, 8, 9, 10) which supplies the servo cylinder (25) with the pressure medium, **characterised in that** the actuation pressure ($p_1$, $p_2$) is determined by calculation from the inflow pressure (p) using the change in positional displacement (s) brought about by the actuation pressure ($p_1$, $p_2$).

**2.** Method according to claim 1, **characterised in that** the pressure sensor (26) is arranged at a location (30) in the conduit (1, 2, 3, 4, 6, 8, 9, 10) upstream of the extending servo cylinder (25).

**3.** Method according to one of the preceding claims, **characterised in that** the change in the positional displacement (s) is determined at the servo cylinder (25) by means of a displacement sensor (27).

**4.** Method according to one of the preceding claims, **characterised in that** the determined actuation pressure ($p_1$, $p_2$) is used for regulation of the positioning force (F) of the servo cylinder (25), especially for shift force regulation for hydraulic gearbox control.

**5.** Method according to one of the preceding claims, **characterised in that** a measure of the flow velocity (v) of the pressure medium through the conduit (1, 2, 3, 4, 6, 8, 9, 10) is determined from the change in the positional displacement (s) of the servo cylinder (25).

**6.** Method according to one of the preceding claims, **characterised in that** the temperature (θ) of the pressure medium is taken into account.

**7.** Method according to one of the preceding claims, **characterised in that** the servo cylinder (25) is of double-acting construction and is actuated by means of two 3/2-way valves (23, 24), the pressure sensor (26) being in communication with the pressure medium inflow connections thereof.

**Revendications**

**1.** Procédé pour la détermination de la pression d'actionnement ($p_1$, $p_2$) d'un vérin de positionnement (25) actionnable par un fluide sous pression, qui, suite à une alimentation en pression d'actionnement ($p_1$, $p_2$), produit une course de positionnement (s), un capteur de pression (26) déterminant une pression d'afflux (p) à un emplacement (30) d'une conduite (1, 2, 3, 4, 5, 6, 7, 8, 9, 10) qui alimente le vérin de positionnement (25) en fluide sous pression, **caractérisé en ce que** la pression d'actionnement ($p_1$, $p_2$) est déterminée par calcul à partir de la pression d'afflux (p) en utilisant la modification de la course de positionnement (s) provoquée par la pression d'actionnement ($p_1$, $p_2$).

**2.** Procédé selon la revendication 1, **caractérisé en ce que** le capteur de pression (26) est agencé à un emplacement (30) de la conduite (1, 2, 3, 4, 5, 6, 7, 8, 9, 10), qui est situé en amont du vérin de positionnement (25) en cours de déploiement.

**3.** Procédé selon l'une des revendications précédentes, **caractérisé en ce que** la modification de la course de positionnement (s) au niveau du vérin de positionnement (25) est déterminée au moyen d'un capteur de course (27).

4. Procédé selon l'une des revendications précédentes, **caractérisé en ce que** la pression d'actionnement déterminée ($p_1$, $p_2$) est utilisée pour réguler la force de positionnement (F) du vérin de positionnement (25), en particulier pour réguler la force de commutation pour une commande de transmission hydraulique.

5. Procédé selon l'une des revendications précédentes, **caractérisé en ce qu'**une valeur pour la vitesse d'écoulement (v) du fluide sous pression à travers la conduite (1, 2, 3, 4, 5, 6, 7, 8, 9, 10) est déterminée à partir de la modification de la course de positionnement (s) du vérin de positionnement (25).

6. Procédé selon l'une des revendications précédentes, **caractérisé en ce que** l'on prend en compte la température ($\theta$) du fluide sous pression.

7. Procédé selon l'une des revendications précédentes, **caractérisé en ce que** le vérin de positionnement (25) est conçu à double effet et est actionné via deux valves à 3 voies/2 positions (23, 24) dont le raccord d'afflux de fluide sous pression est relié au capteur de pression (26).

Fig. 1

Fig. 2a

Fig. 2b

Fig. 2c

Fig. 2

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19931973 A1